# EUROPEAN PATENT APPLICATION

(11) **EP 2 848 428 A1**
(43) Date of publication of application: **18.03.2015**
(21) Application number: 14162970.9
(22) Date of filing: 31.03.2014
(51) Int. Cl.: B60B 27/00, B60B 27/02, F16D 41/36

(54) **Driving device for a hub**

(30) Priority: 03.09.2013 TW 102216502
(71) Applicant: Lee, Charles, Taichung City 428 (TW)
(72) Inventor: Lee, Charles, Taichung City 428 (TW)
(74) Representative: Chaillot, Geneviève

(57) **Abstract**

A hub assembly includes a hub with an axle extending axially therethrough. A socket has an open end in a first end thereof which is inserted into the space of the hub. A driving unit includes a sleeve, two ratchet rings, two roller members and two resilient members. The first and second ratchet rings are engaged with each other by teeth on the two respective end faces thereof. The first and second ratchet rings are mounted to the sleeve. The two roller members are respectively located in the two ratchet rings. The two resilient members are mounted to two ends of the sleeve respectively and located outside of the first and second ratchet rings. The driving unit is located in the space and the axle extends through the driving unit which is an integral single part. The driving device operates smoothly and has less noise.

## Description

### FIELD OF THE INVENTION

The present invention relates to a driving device, and more particularly, to a single-part driving device for a hub and the driving device has better concentricity which is easily installed and dis-assembled.

### BACKGROUND OF THE INVENTION

The conventional bicycle hub is located between the rear wheel and the flywheel, the axle extends through the hub so as to drive the rear wheel. A ratchet device is installed between the hub and the flywheel. By treading the pedals to drive the chain and the flywheel, the rear wheel is rotated to move the bicycle forward.

The conventional ratchet device and generally comprises a socket at one end of the hub and multiple pawls and ratchet teeth are engaged with each other and located between the socket and the hub. A resilient device is located between the pawls and ratchet teeth. The ratchet teeth each have two inclined faces on two sides thereof so that when the pawls are matched with one side of the ratchet teeth, the socket and the hub are co-rotated. When the pawls are matched with the other one side of the ratchet teeth, the resilient device is activated to disengage the socket from the hub.

The driving ways of the ratchet wheels of the conventional driving device generally are cataloged into the axial type and the radial type. The axial type means that the ratchet wheel has teeth extending along the axial direction of the hub so as to be cooperated with the axial ratchet teeth to transmit the force. The radial type means that the ratchet wheel has teeth extending along the radial direction of the hub so as to be cooperated with the radial ratchet teeth to transmit the force.

Taiwan Utility Model Application No. 100218595 discloses an axial type driving device and comprises an axle extending through a casing which has a connection end formed on an outside along the axial direction. The connection end has a fixing slot and a reception slot which is located on outside of the connection end. A chain-wheel base is rotatably connected to the axial and located at one end of the casing. The chain-wheel base has a connection portion and an installation portion, wherein the connection portion is located corresponding to the fixing slot and the installation portion is located on outside of the chain-wheel base. A clutch device is located between the casing and the chain-wheel base and has a positioning member located in the fixing slot, a clutch member axially located on one side of the positioning member, a driving member axially located on one side of the clutch member and fixed to the connection portion, and a resilient member located between the clutch member and the positioning member. The positioning member has multiple first engaging portions which are engaged with the second engaging portions on the clutch member. The clutch member further has a driven portion which is located in opposite to the second engaging portions. The driving member has multiple driving portions located corresponding to the driven member. The chain-wheel base drives the driving member to move toward one direction and the driving portions drive the driven portions to drive the clutch member from a remote position to be engaged with the positioning member so as to co-rotate the casing. The chain-wheel base is rotated relative to the casing, the resilient member is able to remove the clutch member from positioning member to allow the chain-wheel base to rotate individually.

Taiwan Utility Model Application No. 101203929 discloses a radial type driving device and comprises a one-direction clutch device in the hub which has a tubular casing, a spring, a first protrusion and a second protrusion. The casing has multiple recesses which are located alternatively in outside of the casing so as to accommodate the pawls of the one-direction clutch device. The spring biases the pawl to an upright position. The first and second protrusions are located at ends of the spring.

The clutch device of the first example has the positioning member, the clutch member, the driving member on the chain-wheel base and the resilient member located between the clutch member and the positioning member. The positioning member and the clutch member are engaged with each other the engagement between the first and second engaging portions. The chain-wheel base drives the driving member to move toward one direction and the driving portions drive the driven portions to drive the clutch member from a remote position to be engaged with the positioning member so as to co-rotate the casing. The chain-wheel base is rotated relative to the casing, the resilient member is able to remove the clutch member from positioning member to allow the chain-wheel base to rotate individually. The tubular casing of the second example has recesses for accommodating the pawls of the clutch device. The first and second protrusions are located at ends of the spring which biases the pawl to the upright position.

However, the parts of the driving device of the axial type are connected between the socket and the hub in the axial direction, there are too many parts involved so that these parts may shift in the axial direction. This can affect the engagement between the teeth and unbalance force is applied to the teeth which tend to be broken within a short period of time. Larger friction and noise are expected. The pawls of the radial type driving device are connected to the socket and biased upright when the socket is rotated, the pawls press the inside of the recesses. The gap between the pawls and the socket becomes larger along with the period of time of use, and this also affects the engagement of the pawls and the cooperated parts.

The present invention intends to provide a driving device for a hub and the driving device improves the shortcomings of the conventional ones.

### SUMMARY OF THE INVENTION

The present invention relates to a hub assembly and comprises a hub having an axle extending axially therethrough and a space is defined in the first end of the hub. A connection ring is located in the space and has multiple first teeth extending axially from the inner periphery thereof. A hollow socket has an open end in the first end thereof and a second end of the socket is connected with the flywheel of the bicycle. The open end has multiple second teeth extending axially from the inner periphery thereof. The open end is inserted into the space and the axle extends through the socket. A driving unit is an integral unit and has a sleeve, a first ratchet ring, a second ratchet ring, two roller members and two resilient members. The first ratchet ring has third teeth extending axially from outside thereof. The second ratchet ring has fourth teeth extending axially from outside thereof. Multiple first ratchet teeth extend from one end face of the first ratchet ring and multiple second ratchet teeth extend from one end face of the second ratchet ring. The first and second ratchet rings are mounted to the sleeve, and the first and second ratchet teeth are engaged with each other. The two roller members are respectively located in the first and second ratchet rings. The two resilient members are two ring-shaped members and mounted to two ends of the sleeve respectively and are located outside of the first and second ratchet rings respectively. The driving unit is located in the space and the axle extends through the driving unit. The third teeth of the first ratchet ring are engaged with the first teeth of the connection ring. The fourth teeth of the second ratchet ring are engaged with the second teeth of the socket. The driving unit is connected between the connection ring and the socket.

The primary object of the present invention is to provide a driving unit of a hub assembly wherein the driving unit is an integral single part which is composed of a sleeve, a first ratchet ring, a second ratchet ring, two roller members and two resilient members. The driving unit is mounted to the axle. When the first and second ratchet rings rotate, the roller members provide the two ratchet rings to operate smoothly. The driving unit has higher concentricity so as to allow the two ratchet rings to share the force evenly to prevent them from being broken. The noise during operation is reduced. The driving unit can be easily replaced and assembled. Each of the roller members is a ring-shaped ball bearing or a self-lubrication bearing, and each of the resilient members is a resilient plate, a spring or a member made by PU.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the hub with the driving unit of the present invention;
Fig. 2 is an exploded view to show the hub with the driving unit of the present invention;
Fig. 3 is an exploded view to show the driving unit of the present invention;
Fig. 4 is a cross sectional view of the driving unit of the present invention;
Fig. 5 is an enlarged cross sectional view of a portion of the driving unit of the present invention;
Fig. 6 is a cross sectional view of the driving unit of the present invention when in operation;
Fig. 7 is an enlarged cross sectional view of a portion of the present invention in Fig. 6;
Fig. 8 is an exploded view to show another embodiment of the driving unit of the present invention, and
Fig. 9 is a cross sectional view of the driving unit of the present invention in Fig. 8.

### DETAILED DESCRIPTION OF THE PREFERRED EMBODIMENT

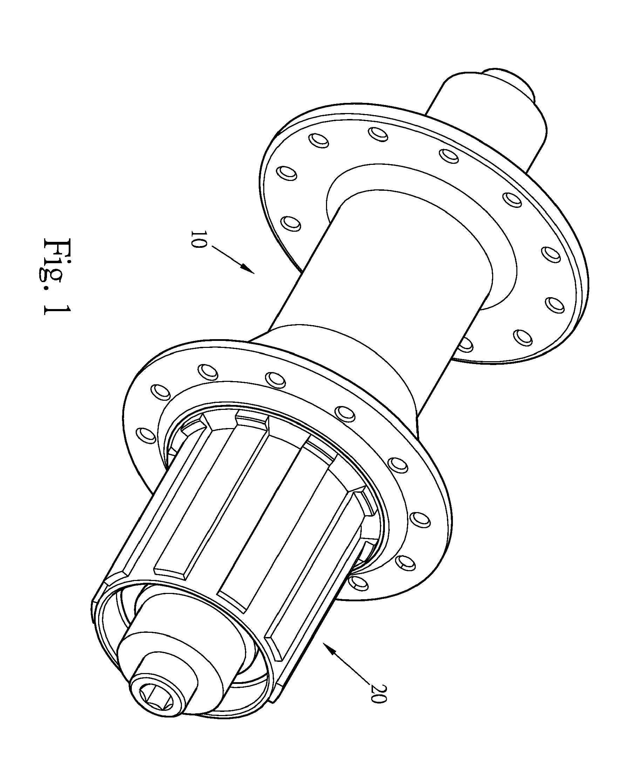

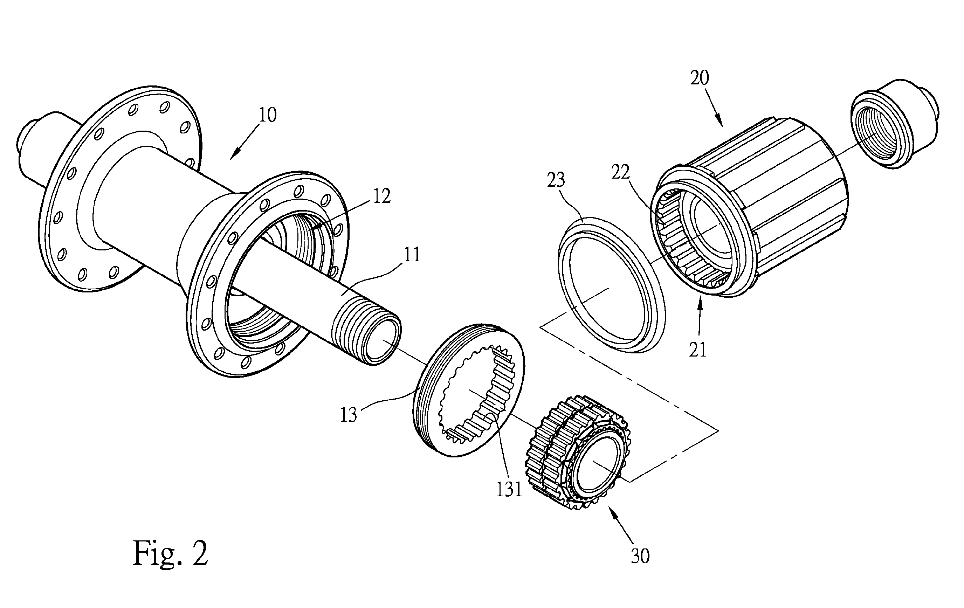

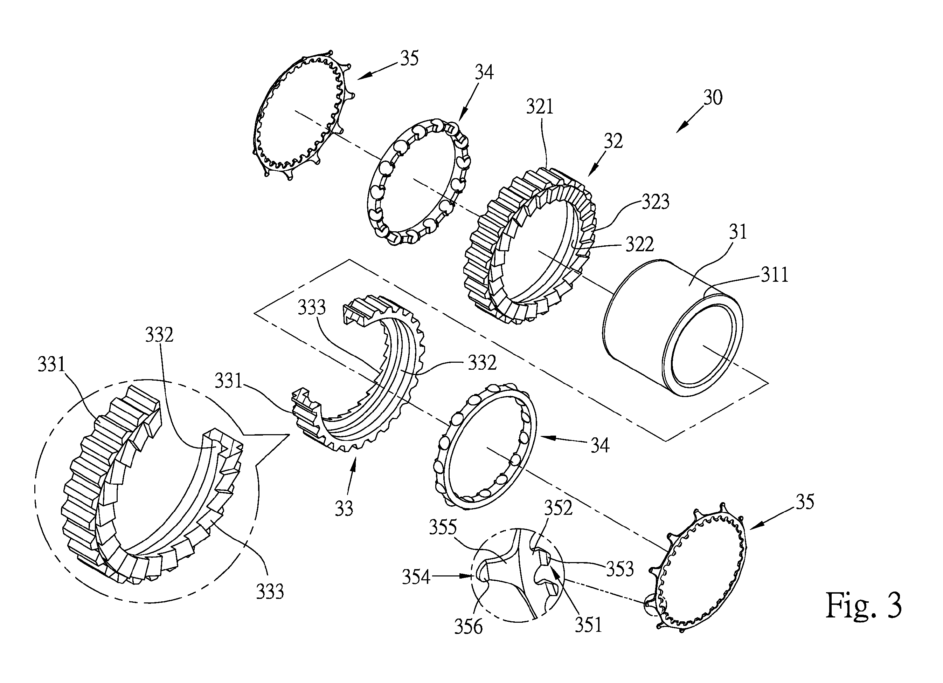

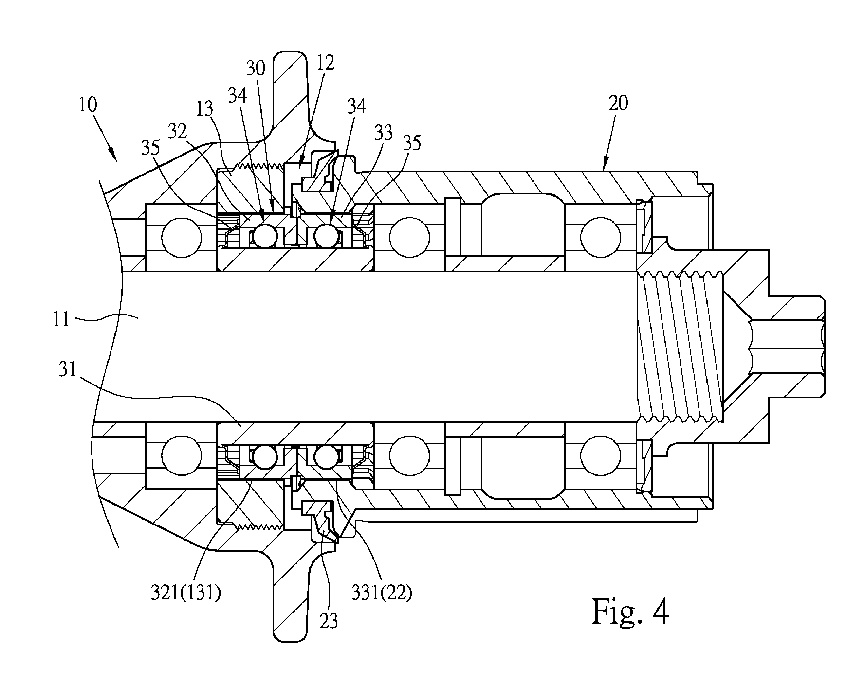

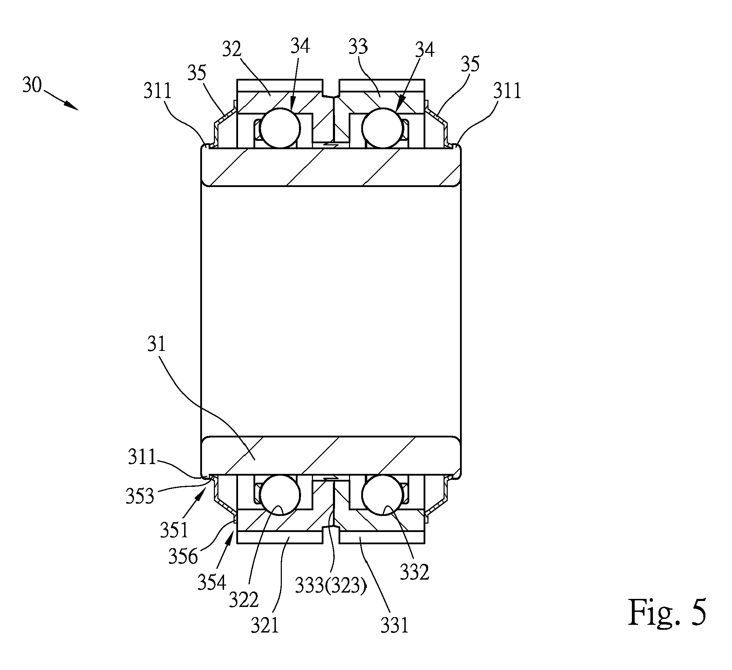

Referring to Figs. 1 to 5, the hub assembly of the present invention comprises a hub 10, a socket 20 and a driving unit 30.

The hub 10 has an axle 11 extending axially therethrough and a space 12 is defined in the first end of the hub 10. A connection ring 13 is located in the space 12 and has multiple first teeth 131 extending axially from the inner periphery thereof. The connection ring 13 has outer threads which are threadedly connected to the inner threads in the space 12.

The socket 20 is a hollow socket and has an open end 21 in the first end thereof and the second end of the socket 20 is connected with a flywheel. The open end 21 has multiple second teeth 22 extending axially from the inner periphery thereof. The open end 21 is inserted into the space 12 and the axle 11 extends through the socket 20. A stop ring 23 is located between the open end 21 of the socket 20 and the space 12 to prevent dust, water or other objects from entering the space.

The driving unit 30 is an integral unit and comprises a sleeve 31, a first ratchet ring 32, a second ratchet ring 33, two roller members 34 and two resilient members 35. The sleeve 31 is a tubular member and each of the two ends of the sleeve 31 has a radial stop portion 311 which is a protrusion or a recessed area. In this embodiment, the stop portion 311 is a flange. The first ratchet ring 32 has third teeth 321 extending axially from outside thereof, and the second ratchet ring 33 has fourth teeth 321 extending axially from outside thereof. Multiple first ratchet teeth 323 extend from one end face of the first ratchet ring 32, and multiple second ratchet teeth 333 extend from one end face of the second ratchet ring 33. The first and second ratchet rings 32, 33 are mounted to the sleeve 31. The first and second ratchet teeth 323, 333 are engaged with each other. The first ratchet ring 32 has a first groove 322 defined in the inner periphery thereof and the second ratchet ring 33 has a second groove 332 defined in the inner periphery thereof. The roller members 34 are respectively engaged with the first and second grooves 322, 332. The two resilient members 35 are two ring-shaped members and mounted to two ends of the sleeve 31 respectively and located outside of the first and second ratchet rings 32, 33 respectively.

Each of the resilient members 35 has first supports 351 extending from the inner periphery thereof, and each of the first supports 351 has a plate-shaped first protrusion 352 and a first end piece 353 which extends outward and axially from the distal end of the first protrusion 352. Each of the resilient members 35 further has second supports 354 extending from the outer periphery thereof. Each of the second supports 354 has a plate-shaped second protrusion 355 and a second end piece 356 which extends outward and axially from the distal end of the second protrusion 355. The two resilient members 35 are respectively mounted to the two ends of the sleeve 31 and located on outside of the first and second ratchet rings 32, 33 respectively. The first end pieces 353 contact the two stop portions 311 of the sleeve 31 respectively. The second end pieces 356 of the second supports 354 contact the other end faces of the two first and second ratchet rings 32, 33 respectively. Therefore, the first and second ratchet rings 32, 33 are resiliently positioned on the sleeve 31.

The driving unit 30 is located in the space 12 and the axle 11 extends through the driving unit 30. The third teeth 321 of the first ratchet ring 32 are engaged with the first teeth 131 of the connection ring 13. The fourth teeth 331 of the second ratchet ring 32 are engaged with the second teeth 22 of the socket 20. The driving unit 30 is connected between the connection ring 13 and the socket 20. The roller members 34 provide support for the axial movement and rotational action.

Each of the roller members 34 is a ring-shaped ball bearing, a cupper ring or a self-lubrication bearing. Each of the resilient members 35 is a resilient plate, a spring or a member made by PU.

The driving unit 30 of the present invention is an integral unit and comprises a sleeve 31, a first ratchet ring 32, a second ratchet ring 33, two roller members 34 and two resilient members 35. When the hub 10, the socket 20 and the driving unit 30 rotate, the roller members 34 provide support for the axial movement and rotational action. The concentricity is increased and the force is shared evenly by the two ratchet rings 32, 33 to prevent the two ratchet rings 32, 33 from being broken, and the noise is also reduced. The driving unit 30 is an integral single part which has higher precision and easily installed and disassembled.

When assembling, the two roller members 34 are respectively engaged with the first and second grooves 322, 332 of the first and second ratchet rings 32, 33. The first and second ratchet rings 32, 33 are then mounted to the sleeve 31 to engage the first ratchet teeth 323 with the second ratchet teeth 333. The two resilient members 35 are mounted to the two ends of the sleeve 31. The first end pieces 353 contact the two stop portions 311 of the sleeve 31 respectively. The second end pieces 356 of the second supports 354 contact the other end faces of the two first and second ratchet rings 32, 33 respectively. The driving unit 30 is connected in the space 12 and the axle 11 extends through the driving unit 30, so that the third teeth 321 are engaged with the first teeth 131. The socket 20 is installed in the space 12 to engage the fourth teeth 331 with the second teeth 22.

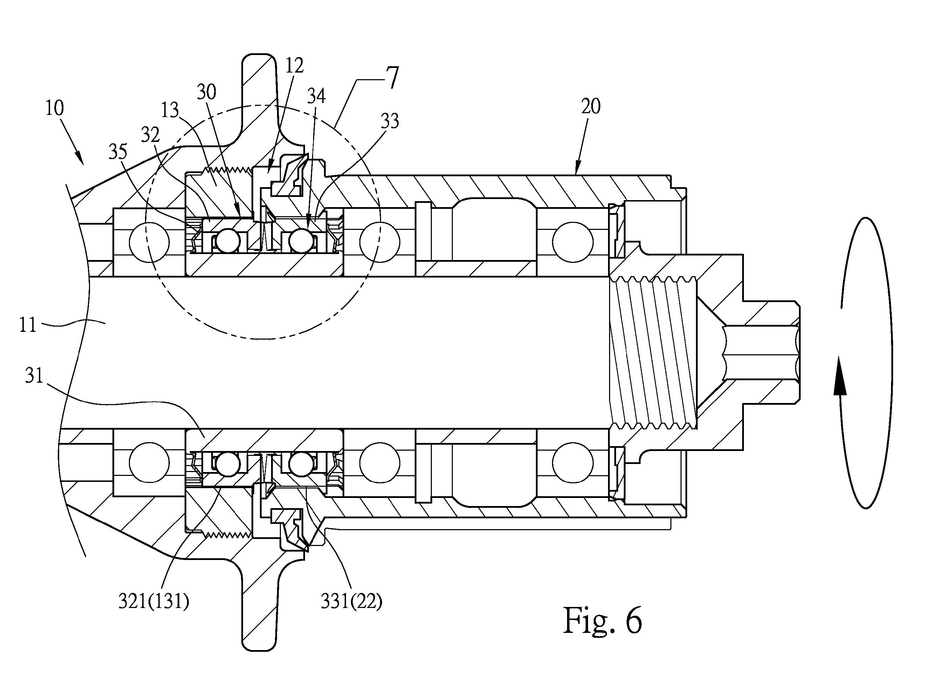

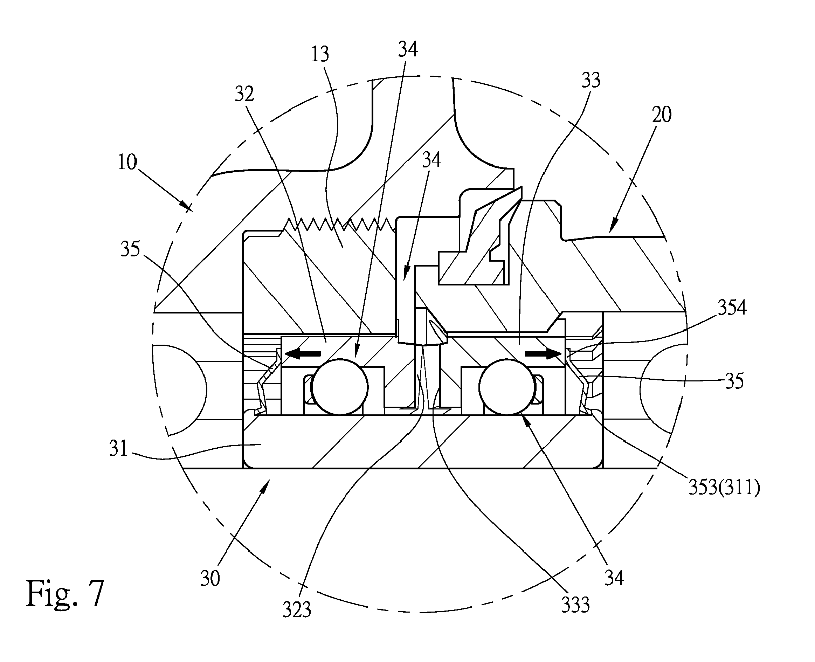

As shown in Figs. 6 and 7, when in use, when the flywheel drives the socket 20 to rotate in one direction, the socket 20 drives the second ratchet teeth 333 to engage with the first ratchet teeth 323 to drive the hub 10. When the flywheel drives the socket 20 to rotate in the opposite direction, the resilient members 35 separate the second ratchet teeth 333 from the first ratchet teeth 323, so that the socket 20 rotates independently.

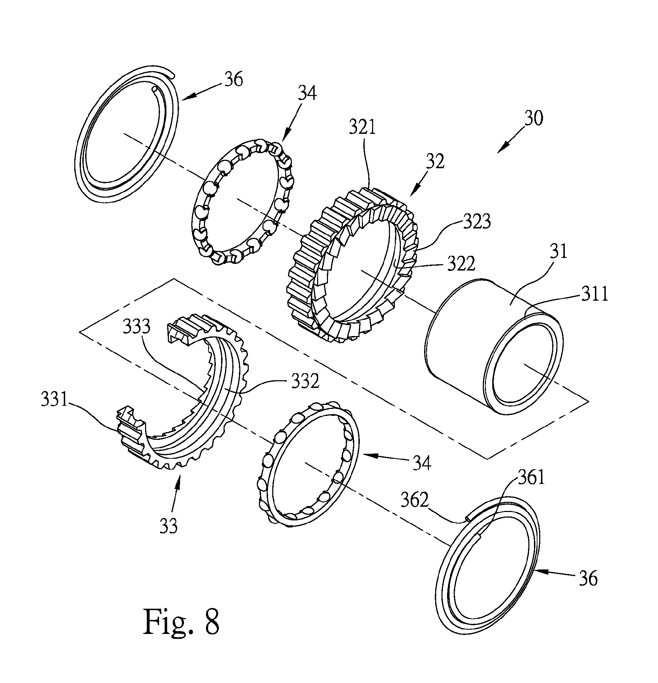

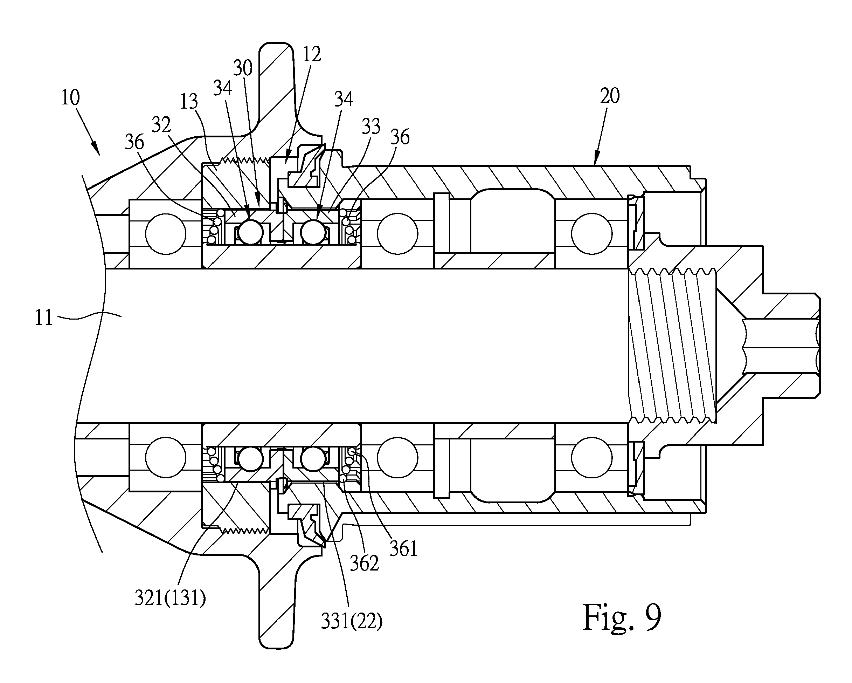

As shown in Figs. 8 and 9, which show another embodiment of the present invention, wherein each of the resilient members 36 is a spirally coil spring and has a first supports 361 and a second support 362 on two ends thereof. The two resilient members 36 are respectively mounted to the two ends of the sleeve 31 and located on outside of the first and second ratchet rings 32, 33 respectively. The first supports 361 contact the two stop portions 311 of the sleeve 31 respectively, and the second supports 362 contact the other end faces of the two first and second ratchet rings 32, 33 respectively.

The driving unit 30 of the present invention is an integral unit and comprises a sleeve 31, a first ratchet ring 32, a second ratchet ring 33, two roller members 34 and two resilient members 35. When the hub 10, the socket 20 and the driving unit 30 rotate, the roller members 34 provide support for the axial movement and rotational action. The concentricity is increased and the force is shared evenly by the two ratchet rings 32, 33 to prevent the two ratchet rings 32, 33 from being broken, and the noise is also reduced. The driving unit 30 is an integral single part which has higher precision and easily assembled and disassembled.

Each of the roller members 34 is a ring-shaped ball bearing, a cupper ring or a self-lubrication bearing. Each of the resilient members 35 is a resilient plate, a spring or a member made by PU.

While we have shown and described the embodiment in accordance with the present invention, it should be clear to those skilled in the art that further embodiments may be made without departing from the scope of the present invention.

## Claims

1. A hub assembly comprising:
a hub having an axle extending axially therethrough, a space defined in a first end thereof, a connection ring located in the space and having multiple first teeth extending axially from an inner periphery thereof;
a hollow socket having an open end in a first end thereof and a second end of the socket adapted to be connected with a flywheel, the open end having multiple second teeth extending axially from an inner periphery thereof, the open end inserted into the space and the axle extending through the socket, and
a driving unit being an integral unit and having a sleeve, a first ratchet ring, a second ratchet ring, two roller members and two resilient members, the first ratchet ring having third teeth extending axially from outside thereof, the second ratchet ring having fourth teeth extending axially from outside thereof, multiple first ratchet teeth extending from one end face of the first ratchet ring, multiple second ratchet teeth extending from one end face of the second ratchet ring, the first and second ratchet rings mounted to the sleeve, the first and second ratchet teeth being engaged with each other, the two roller members respectively located in the first and second ratchet rings, the two resilient members are two ring-shaped members and mounted to two ends of the sleeve respectively and located outside of the first and second ratchet rings respectively, the driving unit located in the space and the axle extending through the driving unit, the third teeth of the first ratchet ring engaged with the first teeth of the connection ring, the fourth teeth of the second ratchet ring engaged with the second teeth of the socket, the driving unit being connected between the connection ring and the socket.

2. The hub assembly as claimed in claim 1, wherein a stop ring is located between the open end of the socket and the space.

3. The hub assembly as claimed in claim 1, wherein the sleeve is a tubular member and each of the two ends of the sleeve has a radial stop portion which is a protrusion or a recessed area, each of the two resilient members contact between the stop portion and the other end face of the first/second ratchet rings.

4. The hub assembly as claimed in claim 1, wherein the first ratchet ring has a first groove defined in an inner periphery thereof and the second ratchet ring has a second groove defined in an inner periphery thereof, the roller members are respectively engaged with the first and second grooves.

5. The hub assembly as claimed in claim 1, wherein each of the resilient members has first supports extending from an inner periphery thereof, each of the first supports has a plate-shaped first protrusion and a first end piece extending outward and axially from a distal end of the first protrusion, each of the resilient members has second supports extending from an outer periphery thereof, each of the second supports has a plate-shaped second protrusion and a second end piece extending outward and axially from a distal end of the second protrusion, the two resilient members are respectively mounted to the two ends of the sleeve and located on outside of the first and second ratchet rings respectively, the first end pieces contact the two stop portions of the sleeve respectively, the second end pieces of the second supports contact the other end faces of the two first and second ratchet rings respectively.

6. The hub assembly as claimed in claim 1, wherein each of the resilient members is a spirally coil spring and has a first supports and a second support on two ends thereof, the two resilient members are respectively mounted to the two ends of the sleeve and located on outside of the first and second ratchet rings respectively, the first supports contact the two stop portions of the sleeve respectively, the second supports contact the other end faces of the two first and second ratchet rings respectively.

7. The hub assembly as claimed in claim 1, wherein each of the roller members is a ring-shaped ball bearing, a cupper ring or a self-lubrication bearing.

8. The hub assembly as claimed in claim 1, wherein each of the resilient members is a resilient plate, a spring or a member made by PU.
